(19) Europäisches Patentamt
European Patent Office
Office européen des brevets

(11) **EP 1 914 906 B1**

(12) **FASCICULE DE BREVET EUROPEEN**

(45) Date de publication et mention
de la délivrance du brevet:
**15.04.2009 Bulletin 2009/16**

(51) Int Cl.:
*H04B 3/54* *(2006.01)* *H04L 5/02* *(2006.01)*

(21) Numéro de dépôt: **07020547.1**

(22) Date de dépôt: **19.10.2007**

(54) **Procédé de transmission de données sur courant porteur et appareils utilisant le procédé**

Verfahren zur Datenübertragung über Stromleitungen sowie Geräte, bei denen ein solches Verfahren angewandt wird

Method for transmitting data over power lines and devices using the method

(84) Etats contractants désignés:
**DE ES FR GB IT**

(30) Priorité: **20.10.2006 FR 0609207**

(43) Date de publication de la demande:
**23.04.2008 Bulletin 2008/17**

(73) Titulaire: **Sagem Communications**
**75015 Paris (FR)**

(72) Inventeur: **Samy, Roger**
**75015 Paris (FR)**

(74) Mandataire: **Maillet, Alain**
**Cabinet Le Guen Maillet**
**5, Place Newquay**
**B.P. 70250**
**35802 Dinard Cedex (FR)**

(56) Documents cités:
**EP-A2- 0 913 955**

• **DAI H ET AL: "ADVANCED SIGNAL PROCESSING FOR POWER LINE COMMUNICATIONS" IEEE COMMUNICATIONS MAGAZINE, IEEE SERVICE CENTER, NEW YORK, NY, US, vol. 41, no. 5, mai 2003 (2003-05), pages 100-107, XP001166411 ISSN: 0163-6804**
• **CRUSSIERE M ET AL: "Robust and high-bit rate communications over PLC channels: a bit-loading multi-carrier spread-spectrum solution" POWER LINE COMMUNICATIONS AND ITS APPLICATIONS, 2005 INTERNATIONAL SYMPOSIUM ON VANCOUVER, BRITISH COLUMBIA, CANADA 6-8 APRIL, 2005, PISCATAWAY, NJ, USA, IEEE, 6 avril 2005 (2005-04-06), pages 37-41, XP010796785 ISBN: 0-7803-8844-5**

**Description**

Domaine technique

L'invention se situe dans le domaine de la transmission de données sur courant porteur et plus particulièrement dans le domaine des techniques de modulation et d'accès multiples, utilisée par les modems sur courant porteur.

Art antérieur

La transmission de données sur le courant porteur est une technologie en plein développement. L'idée est d'utiliser le réseau de distribution d'énergie électrique pour la transmission de données.

L'article de Dai H et Al: « Advanced signal processing for power line communications » IEEE communications magazine, IEEE service center, New York, NY, US, vol. 41, n° 5, mai 2003 présente des techniques de traitement du signal pour combattre un environnement de communication hostile sur courant porteur.

L'article de Crussiere M et Al : « Robust and high-bit rate communications over PLC channels : a bit-loading multi-carrier spread-spectrum solution » Power line communications and its applications, 2005 international symposium on Vancouver, British Columbia, Canada 6-8 April, 2005, Piscataway, NJ, USA, IEEE, 6 avril 2005 présente un algorithme de chargement à granularité fine pour des systèmes de modulation multi fréquence à large spectre.

La demande de brevet EP 0 913 955 A2 présente un appareil de communication adapté pour être utilisé avec des transmissions principalement électriques.

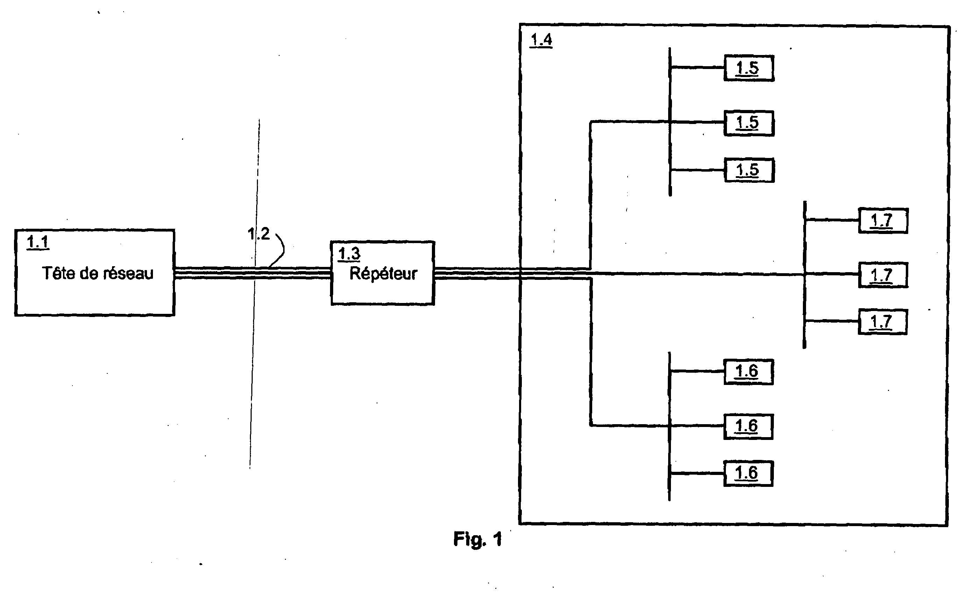

L'architecture générale d'un système de transmission de données sur courant porteur est décrit Fig. 1. Le système comprend une tête de réseau 1.1. Cette tête de réseau est connectée à un réseau de communication de données non représenté, ce peut être de l'ATM ou autre. Les données reçues sont à transmettre à un modem terminal (1.5, 16 et 1.7) dans un bâtiment 1.4. La tête de réseau 1.1 et le bâtiment 1.4 sont connectés par le faisceau 1.2 d'alimentation du bâtiment en énergie électrique. Ce faisceau se compose de trois câbles portant chacun une phase dans le cas d'une alimentation dite « tri-phasée ». Une fois dans le bâtiment, chaque phase est séparée et alimente en énergie une partie du bâtiment, par exemple un appartement. Une seule de ces phases est donc connectée au modem terminal de l'usagé (1.5, 1.6 et 1.7). Les données transmises depuis la tête de réseau 1.1 à destination d'un modem terminal 1.5 doivent donc ultimement transiter sur la phase connectée à ce modem. D'une manière générale aujourd'hui, les mêmes données sont dupliquées sur les 3 phases du faisceau. Le même signal est donc transmis à tous les modems quelle que soit la phase les connectant à la tête de réseau. Du fait de l'atténuation du signal le long du câble, le signal ne peut se transmettre de manière fiable que sur une distance de 500 mètres à 1 kilomètre environ. Lorsque la tête de réseau se situe à une distance plus grande du bâtiment, il est donc nécessaire d'intercaler des répéteurs 1.3 sur la ligne de façon à répéter le signal pour atteindre ainsi de grandes distances. La robustesse de transmission du signal est ici un point clé pour la disposition de ces répéteurs, plus la transmission est robuste, moins le nombre de répéteurs devant être installés entre la tête de réseau et le modem de l'usager est grand.

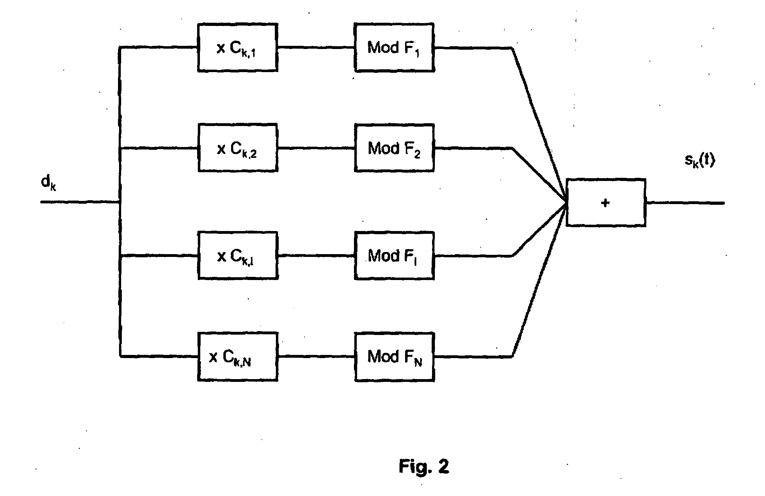

Nous nous intéresserons dans ce document plus particulièrement à la technologie de transmission MC-CDMA (« Multi Carrier - Code Division Multiple Access » en anglais) sur courant porteur. Cette technique combine la technique de transmission par porteuses orthogonales OFDM (« Orthogonal Frequency Division Multiplexing » en anglais) et la méthode d'étalement de spectre CDMA (« Code Division Multiple Access » en anglais). Cette technique est illustrée Fig. 2. Chaque utilisateur, modem, dispose d'un code d'étalement de N composantes ($C_{k,1}$, ..., $C_{k,i}$, ..., $C_{k,N}$). De préférence, mais ce n'est pas obligatoire, la longueur N du code d'étalement correspond au nombre de porteuses de la modulation OFDM choisie. Un symbole $d_k$ à transmettre par un utilisateur k est dupliqué N fois. Chaque exemplaire est multiplié par une composante $C_{k,i}$ du code d'étalement propre à cet utilisateur pour être ensuite modulé sur la porteuse de fréquence $F_i$. Ces signaux sont ensuite additionnés pour former un signal OFDM donnant le signal $S_k(t)$, somme de toutes les porteuses, pour ce symbole. Le même traitement est appliqué pour les symboles devant être transmis par chaque utilisateur. La somme de tous ces traitements est ensuite émise à destination du récepteur au sein du canal de transmission.

Il est donc connu de dupliquer un signal MC-CDMA sur chaque câble d'alimentation d'un faisceau électrique pour transmettre des données entre une tête de réseau et un modem terminal. Dans une telle installation de distribution de données numériques par le courant porteur, un facteur important du coût du système est le nombre de répéteurs que l'on doit installer sur la ligne entre la tête de réseau et le modem terminal. Pour une robustesse de transmission donnée du signal, moins on doit installer de répéteurs et plus l'installation est économique.

Exposé de l'invention

L'invention vise à résoudre le problème du nombre de répéteurs devant être installés par un schéma de modulation permettant une transmission plus robuste des données entre la tête de réseau et le bâtiment. Pour ce faire, il est proposé d'envoyer des signaux différents sur chaque phase et d'utiliser un codage étalant le signal sur les différentes porteuses de chaque phase.

Cette solution permet d'augmenter la robustesse de la transmission par un plus grand étalement en fréquence du signal sur la transmission entre la tête de réseau et un équipement avant la séparation des trois phases à destination des modems terminaux.

L'invention concerne un procédé d'émission d'un signal, par un émetteur à destination d'un récepteur connecté par une pluralité de canaux courants porteurs en ligne de transmission, comportant :

- une étape d'étalement du spectre du signal par multiplication du signal par chacune des composantes d'un code d'étalement multi composantes,
- une étape d'émission des signaux résultant de cette multiplication par chacune des composantes du code d'étalement sur différentes porteuses,

**caractérisé en ce que** ces porteuses sont réparties sans duplication sur différents canaux au sein de la pluralité de canaux connectant l'émetteur et le récepteur.

Selon un mode particulier de réalisation de l'invention, la taille du code d'étalement correspond au nombre total de porteuses disponibles sur l'ensemble des canaux reliant l'émetteur et le récepteur.

Selon un mode particulier de réalisation de l'invention, les différentes porteuses sont émises sur chaque canal selon un schéma OFDM.

L'invention concerne également un procédé de réception d'un signal, provenant d'un émetteur, par un récepteur connecté par une pluralité de canaux courants porteurs en ligne de transmission, comportant :

- une étape de démodulation des signaux modulés sur différentes porteuses sur les différents canaux de transmission,
- une étape de désétalement du spectre des différentes composantes du signal à l'aide d'un code d'étalement multi composantes,

**caractérisé en ce que** lesdites étapes de démodulation et de désétalement sont adaptées à démoduler et désétaler un signal dont les différentes composantes sont issues sans duplication de différents canaux au sein de la pluralité de canaux connectant l'émetteur et le récepteur.

Selon un mode particulier de réalisation de l'invention, l'étape de démodulation est une étape de démodulation OFDM.

L'invention concerne également un émetteur de signaux à destination d'un récepteur connecté par une pluralité de canaux courants porteurs en ligne de transmission comportant :

- des moyens d'étalement du spectre du signal par multiplication du signal par chacune des composantes d'un code d'étalement multi composantes,
- des moyens d'émission des signaux résultant de cette multiplication par chacune des composantes du code d'étalement sur différentes porteuses,

**caractérisé en ce que** ledit émetteur comporte des moyens pour répartir ces porteuses sans duplication sur différents canaux au sein de la pluralité de canaux connectant l'émetteur et le récepteur.

L'invention concerne également un récepteur d'un signal provenant d'un émetteur connecté par une pluralité de canaux courants porteurs en ligne de transmission comportant :

- des moyens de démodulation des signaux modulés sur différentes porteuses sur les différents canaux de transmission,
- des moyens de désétalement du spectre des différentes composantes du signal à l'aide d'un code d'étalement multi composantes,

**caractérisé en ce que** lesdites étapes de démodulation et de désétalement sont adaptées à démoduler et désétaler un signal dont les différentes composantes sont issues sans duplication de différents canaux au sein de la pluralité de canaux connectant l'émetteur et le récepteur.

Selon un mode particulier de réalisation de l'invention, les canaux de transmission sont des lignes électriques.

L'invention concerne également un système de transmission de données comprenant au moins un émetteur et au moins un récepteur selon l'invention.

L'invention concerne également un avion comprenant un système de transmission selon l'invention.

Brève description des dessins

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la Fig. 1 représente l'architecture générale d'un système de transmission de données sur courant porteur.
La Fig. 2 représente le schéma de principe de la modulation MC-CDMA.
La Fig. 3 illustre le schéma de principe de la modulation selon un exemple de réalisation de l'invention.
La Fig. 4 représente l'architecture générale d'un système de transmission de données sur courant porteur de l'exemple de réalisation de l'invention.
La Fig. 5 représente l'architecture d'un avion comportant un système de transmission selon l'invention.

Exposé détaillé de l'invention

L'invention repose sur l'idée d'utiliser la diversité spatiale apportée par les trois câbles portant les phases pour augmenter la robustesse de la transmission de données entre la tête de réseau et le bâtiment. Pour cela, un signal différent est émis sur chacune des phases au lieu de dupliquer le signal sur les trois phases.

A l'échelle de la communication, le canal de transmission sur courant porteur est statique, sélectif en fréquence, et peut être connu de l'émetteur et du récepteur. Cette connaissance à J'émission nécessite un échange d'informations entre le récepteur et l'émetteur. Nous supposons cette étape réalisée avec succès par les couches concernées.

Contrairement aux canaux radio mobiles, le bruit sur les canaux CPL (Courants Porteurs en Ligne) ne peut être réduit à du bruit gaussien. L'étalement de spectre offre alors tout son intérêt et le rejet des brouilleurs est d'autant plus efficace que les codes d'étalement sont longs.

Là où les schémas de modulation MC-CDMA classiques utilisent une répartition de spectre en fréquence au sein d'un canal, l'invention propose de la réaliser sur plusieurs canaux différents. De cette façon on tire parti du degré de corrélation faible entre le bruit impulsionnel sur les différents canaux et de la possibilité d'utiliser des codes d'étalement de longueur plus grande. Chacun de ses effets contribuent à apporter une plus grande robustesse à la transmission.

L'exemple de réalisation repose sur l'utilisation de la technique MC-CDMA décrite plus haut mais en répartissant les composantes codées du signal sur les différents canaux de transmission. De cette façon, on dispose d'un plus grand nombre de porteuses utilisables et il est donc possible d'utiliser des codes d'étalement de plus grande longueur. En effet, un codage MC-CDMA utilise typiquement une longueur de code d'étalement correspondant au nombre de porteuses utilisées. Le fait de disposer de 3 câbles permet de multiplier par 3 le nombre de porteuses disponibles pour le codage COMA. Si l'on appelle k la longueur du code d'étalement et N le nombre de porteuses disponibles par câble, il est alors possible d'utiliser des codes d'étalement d'une longueur pouvant aller jusqu'à 3N. Dans la suite de ce document, nous appellerons « longs » les codes d'étalement comportant plus de composantes que le nombre de porteuses utilisées sur un câble unique par opposition aux codes d'étalement que nous appellerons « courts », comportant un nombre de composantes plus réduit et utilisable par un schéma MC-CDMA sur un câble unique.

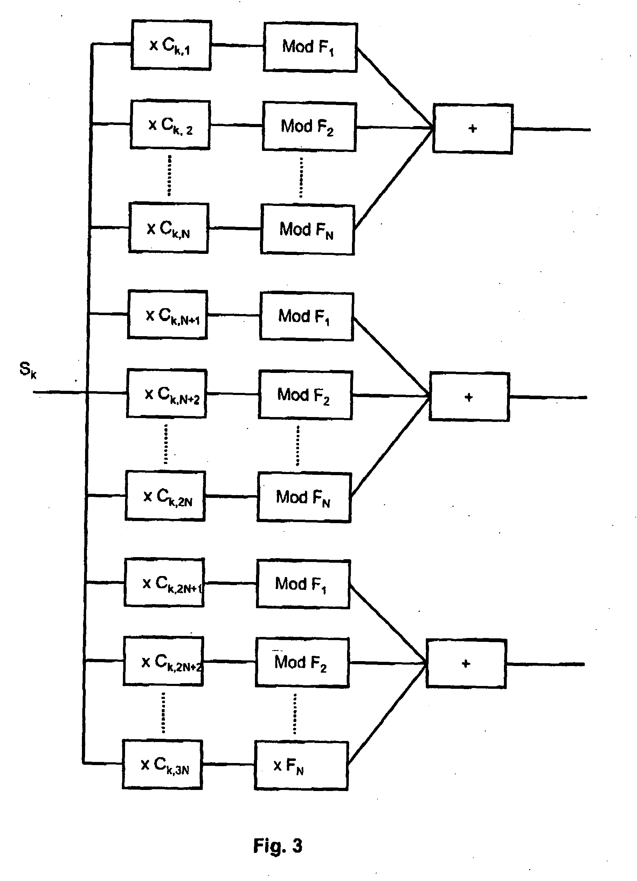

La Fig. 3 illustre le schéma de codage d'un émetteur dans le cas de l'utilisation d'un code d'étalement de longueur 3xN correspondant au nombre de porteuses disponibles sur l'ensemble des trois câbles de la liaison CPL. On y voit un symbole $d_k$ émis par un utilisateur k. Le symbole est dupliqué autant de fois que le code d'étalement $C_k$ correspondant à l'utilisateur k possède de composantes $C_{k,i}$. Le symbole est alors multiplié par la composante correspondante du code d'étalement et modulé selon l'une des fréquences OFDM de l'un des trois câbles correspondant à l'une des phases de l'alimentation en courant.

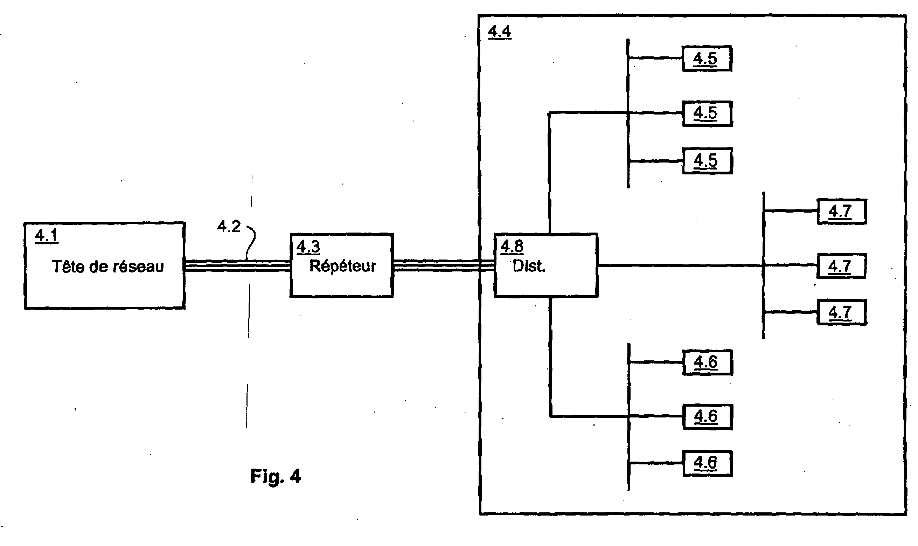

Dès lors que l'on utilise un tel schéma de modulation, les câbles ne portent plus le même signal. Comme un seul de ces câbles est connecté au modem terminal de l'utilisateur, le signal doit être démodulé en amont de ce modem. Le schéma de modulation proposé est donc utilisé, dans l'exemple de réalisation de l'invention, uniquement entre la tête de réseau et équipement de distribution du signal dans le bâtiment. Cette architecture est représentée Fig. 4 qui reprend le schéma de la Fig. 1 avec l'adjonction de l'équipement de distribution 4.8. Cet équipement est connecté en entrée aux trois câbles du courant porteur et en sortie, distribue, via 3 câbles indépendants, l'énergie et les signaux à destination des modems terminaux.

C'est au sein de cet équipement que le signal sera démodulé à l'aide des codes d'étalement utilisateurs longs. Un ré encodage du signal à l'aide de codes d'étalement courts est alors effectué et le signal résultant est émis, de manière dupliquée, sur les trois câbles de sortie à destination des modems terminaux. On voit donc qu'un schéma de modulation MC-CDMA utilisant des codes d'étalement longs est utilisé entre la tête de réseau et l'équipement de distribution, tandis qu'un schéma de modulation MC-CDMA utilisant des codes d'étalement courts est lui utilisé entre l'équipement de distribution et le modem terminal. Cette dernière étape de transmission se produisant généralement au sein du bâtiment destinataire, on peut supposer ce canal moins bruité que le canal en amont et pouvant utiliser un schéma de modulation apportant moins de robustesse.

Dans une variante de mise en oeuvre de l'invention, l'équipement de distribution est intégré au dernier répéteur avant le bâtiment. Il est évident que la distribution peut se faire, en fait, au sein de n'importe quel équipement sur le trajet du câble d'alimentation avant la séparation des trois câbles à destination des modems terminaux. De même, l'exemple de réalisation décrit l'utilisation de trois câbles d'alimentation, ce qui correspond à la norme en alimentation électrique, mais l'invention peut tout à fait être utilisée de la même manière avec un nombre de câbles d'alimentation au moins égal à deux. Dans ce cas, en choisissant un jeu de codes d'étalement de longueur adaptée, le signal sera réparti sans duplication sur un ensemble de porteuses appartenant à chacun des câbles disponibles. Cette répartition du signal en fréquence sur différents câbles est particulièrement avantageuse dans le cadre de l'utilisation de câbles d'alimentation en courant porteur pour la transmission de données car ce canal de transmission est soumis à des perturbations transitoires résultant de la coupure et de l'allumage d'appareils, perturbations n'affectant généralement que le câble connecté audit appareil. La répartition permet donc d'apporter de la robustesse, et donc par voie de conséquence, du débit à la transmission entre la tête de réseau et le bâtiment. Il est également possible d'espacer les répéteurs sur la ligne et donc de minimiser le coût de l'installation.

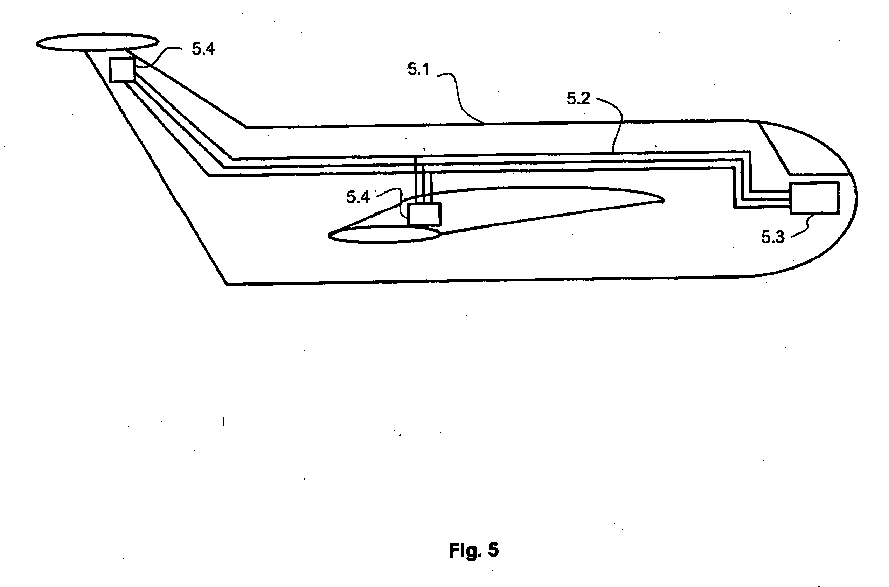

La Fig. 5 illustre un autre exemple de réalisation de l'invention. Cet exemple se situe dans le cadre de l'aviation.

Parmi les applications à bord d'un avion civil, l'exploitation du CPL/PLT est liée à la réduction de pose de câbles supplémentaires pour le confort du passager et aussi la sécurité du pilotage lors des phases de décollage et d'atterrissage où le pilote a besoin de cerner son environnement grâce à des senseurs multiples (cameras FLIR,SLIR,..etc).

L'application du CPL/PLT dans l'aéronautique permet de réduire le poids des câbles donc la consommation en kérosène mais aussi réduit le coût des opérations de maintenance et le risque de panne des équipements existants lors d'un nouveau câblage.

Le service de diffusion multimédia à la demande (MOD) pour le passager est proche des services combinant voie, donnée et télévision des fournisseurs de services Internet mais les modems CPL/PLT utilisés dans ce cadre sont basés sur le standard « Homeplug » qui exploite le signal à 50Hz issu du secteur pour synchroniser tous les traitements et rejeter plus facilement les bruits qui sont des harmoniques du secteur.

Mais à bord d'un avion, les équipements vidéo sont alimentés par des tensions continues issues d'alternateur à bord et donc ces modems sont difficilement exploitables à bord même si l'on résout les problèmes de vibrations et de température de fonctionnement hors cabine non pressurisée et ni climatisée. Des technologies de modems PLT/CPL (DS2,SPIDCOM) non synchrones du secteur existent et permettent de réaliser l'invention dans le domaine aéronautique.

Par contre, l'acquisition et la transmission de données vidéo destinées à l'aide au pilotage exigent certes une ergonomie dans la visualisation des images au pilote, mais aussi une certaine sécurisation.

L'application ultime en aéronautique qui doit transmettre les commandes de vol doit aussi être sécurisée par la fusion de données multi-chemin. Si l'on appelle Chi(i=1,3) chaque chemin, on effectue une fusion de données basée sur la théorie bayésienne ou sur d'autres théories comme celle de l'évidence, de la croyance ou des ensembles flous.

Cette fusion probabiliste des signaux SIG permet de pondérer les données des capteurs et actionneurs par des données à priori Pr sur les chemins associés au câblage de l'avion et permet d'invalider des données erronées générées par un chemin non opérationnel en raison de pannes d'un capteur et/ou d'un circuit d'acheminement défaillant. On peut exprimer le signal final à l'instant Tk par la formule :

$$\text{SIGFINAL(Tk)} = \quad \text{Pr(Ch1,Tk)*SIG(Ch1,Tk)} + $$
$$\text{Pr(Ch2,Tk)*SIG(Ch2,Tk)} + $$
$$\text{Pr(Ch3,Tk)*SIG(Ch3,Tk)}.$$

Comparé aux modems opérant sur un réseau tri-phasé, la fusion de données des 3 chemins possibles permet d'assurer la fonction en cas de coupures de 2 chemins simultanés.

La distribution d'énergie électrique dans un avion est faite par un faisceau de trois câbles alimentant les divers organes électriques de l'avion. Parmi ces organes se trouvent, entre autres, les ailerons, le train d'atterrissage et les instruments du cockpit. Le réseau câblé d'alimentation électrique peut alors également servir de réseau de communication de données et des transmissions de signaux peuvent être superposées au courant passant par ces câbles. Le domaine de l'aviation est un domaine où la fiabilité est très importante pour des raisons de sécurité. Dans ce cadre, un schéma de modulation selon l'invention permet la transmission de manière robuste de données sur le réseau d'alimentation électrique de l'avion.

Sur la figure 5, un avion 5.1 est représenté schématiquement. Cet avion est câblé par un faisceau 5.2 le parcourant entre le cockpit et les différents organes de l'appareil. Un équipement de commande 5.3 est couplé aux organes de pilotage de l'avion est connecté au réseau d'alimentation électrique 5.2. Cet équipement va jouer le rôle de la tête de réseau dans le précédent mode de réalisation. Les organes de vol tels que les ailerons seront dotés d'équipements de commande 5.4 également connectés au réseau d'alimentation électrique 5.2. Des transmissions de données utilisant un schéma de modulation MC-CDMA à répartition de fréquence par code d'étalement sont utilisées entre l'équipement de commande 5.3 et les équipements de commande 5.4. Ici aussi, les codes d'étalement utilisés sont des codes d'étalement permettant de répartir sans duplication les différentes composantes du signal sur les différents câbles du faisceau électrique de l'appareil. De cette façon, les commandes de pilotage issues du cockpit sont transmises aux équipements de commande des organes de vol. Il est ainsi possible d'équiper un appareil d'un système de commande numérique en utilisant le câblage électrique de l'appareil. Il s'ensuit une simplification et donc une plus grande fiabilité du système par rapport à l'installation d'un second réseau dédié à la transmission de données au sein de l'appareil. Le système tire avantageusement parti de l'augmentation de fiabilité dans la transmission apportée par une répartition en fréquence du signal par code d'étalement sur plusieurs câbles séparés.

Un tel réseau de transmission de données peut également être mis à profit pour l'installation d'un système d'aide à la navigation au sol. Dans un tel système, un jeu de caméras est installé à bord de l'avion permettant de capter l'abord immédiat de l'appareil. Par exemple, une caméra est installée à la queue de l'appareil tandis que deux autres caméras sont installées en bout d'aile. Les flux vidéo captés par ces caméras sont alors transmis au cockpit par l'intermédiaire du réseau de transmission de données. Le pilote peut donc visualiser ainsi l'environnement immédiat de l'appareil et se servir de ces données pour déplacer l'avion au sol. Un tel réseau peut également servir à distribuer des services, tels que des programmes audio visuels à des terminaux à disposition des passagers de l'avion.

## Revendications

1.  Procédé d'émission d'un signal, par un émetteur (4.1) à destination d'un récepteur (4.8) connecté par une pluralité de canaux courants porteurs en ligne de transmission (4.2), comportant :

    - une étape d'étalement du spectre du signal par multiplication du signal par chacune des composantes d'un code d'étalement multi composantes,
    - une étape d'émission des signaux résultant de cette multiplication par chacune des composantes du code d'étalement sur différentes porteuses,

    **caractérisé en ce que** ces porteuses sont réparties sans duplication sur différents canaux au sein de la pluralité de canaux connectant l'émetteur et le récepteur.

2.  Procédé selon la revendication 1 où la taille du code d'étalement correspond au nombre total de porteuses disponibles sur l'ensemble des canaux reliant l'émetteur et le récepteur.

3.  Procédé selon la revendication 1 où les différentes porteuses sont émises sur chaque canal selon un schéma OFDM.

4.  Procédé de réception d'un signal, provenant d'un émetteur (4.1), par un récepteur (4.8) connecté par une pluralité de canaux courants porteurs en ligne de transmission (4.2), comportant :

    - une étape de démodulation des signaux modulés sur différentes porteuses sur les différents canaux de transmission,
    - une étape de désétalement du spectre des différentes composantes du signal à l'aide d'un code d'étalement multi composantes,

    **caractérisé en ce que** lesdites étapes de démodulation et de désétalement sont adaptées à démoduler et désétaler un signal dont les différentes composantes sont issues sans duplication de différents canaux au sein de la pluralité de canaux connectant l'émetteur et le récepteur.

5.  Procédé selon la revendication 4 où la taille du code d'étalement correspond au nombre total de porteuses disponibles sur l'ensemble des canaux reliant l'émetteur et le récepteur.

6.  Procédé selon la revendication 4 où l'étape de démodulation est une étape de démodulation OFDM.

7.  Emetteur (4.1) de signaux à destination d'un récepteur (4.8) connecté par une pluralité de canaux courants porteurs en ligne de transmission (4.2) comportant :

- des moyens d'étalement du spectre du signal par multiplication du signal par chacune des composantes d'un code d'étalement multi composantes,
- des moyens d'émission des signaux résultant de cette multiplication par chacune des composantes du code d'étalement sur différentes porteuses,

**caractérisé en ce que** ledit émetteur comporte des moyens pour répartir ces porteuses sans duplication sur différents canaux au sein de la pluralité de canaux connectant l'émetteur et le récepteur.

8. Récepteur (4.8) d'un signal provenant d'un émetteur (4.1) connecté par une pluralité de canaux courants porteurs en ligne de transmission comportant :

- des moyens de démodulation des signaux modulés sur différentes porteuses sur les différents canaux de transmission,
- des moyens de désétalement du spectre des différentes composantes du signal à l'aide d'un code d'étalement multi composantes,

**caractérisé en ce que** lesdits moyens de démodulation et de désétalement sont adapté à démoduler et désétaler un signal dont les différentes composantes sont issues sans duplication de différents canaux au sein de la pluralité de canaux connectant l'émetteur et le récepteur.

9. Procédé ou dispositif selon l'une des revendications précédentes où les canaux de transmission sont des lignes électriques.

10. Système de transmission de données comprenant au moins un émetteur (4.1) selon la revendication 7 et au moins un récepteur (4.8) selon la revendication 8.

11. Avion (5.1) comprenant un système de transmission selon, la revendication 10.

## Claims

1. Process for transmitting a signal through a transmitter (4.1) to a receiver (4.8) connected by a plurality of current-carrying channels forming a transmission line (4.2), comprising:

- a step of spreading the spectrum of the signal by multiplying the signal by each of the components of a multi-component spreading code,
- a step of emitting signals resulting from this multiplication by each of the components of the spreading code over different carriers,

**characterised in that** these carriers are distributed without duplication over various channels within the plurality of channels connecting the transmitter and the receiver.

2. Process according to claim 1, wherein the size of the spreading code corresponds to the total number of carriers available over all the channels connecting the transmitter and the receiver.

3. Process according to claim 1, wherein the different carriers are transmitted over each channel according to an OFDM plan.

4. Process for receiving a signal, coming from a transmitter (4.1), by a receiver (4.8) connected by a plurality of current-carrying channels forming a transmission line (4.2), comprising:

- a step of demodulating the signals modulated on different carriers over the different transmission channels,
- a step of unspreading the spectrum of the different components of the signal using a multi-component spreading code,

**characterised in that** the steps of demodulation and unspreading are adapted to demodulate and unspread a signal the various components of which are emitted without duplication from different channels within the plurality of channels connecting the transmitter and the receiver.

5. Process according to claim 4 wherein the size of the spreading code corresponds to the total number of carriers available over all the channels connecting the transmitter and the receiver.

6. Process according to claim 4, wherein the demodulation step is an OFAM demodulation step.

7. Transmitter (4.1) of signals intended for a receiver (4.8) connected by a plurality of current-carrying channels forming a transmission line (4.2), comprising:

   - means for spreading the spectrum of the signal by multiplying the signal by each of the components of a multi-component spreading code,
   - means for transmitting signals resulting from this multiplication by each of the components of the spreading code over different carriers,

   **characterised in that** said transmitter comprises means for distributing these carriers without duplication over various channels within the plurality of channels connecting the transmitter and the receiver.

8. Receiver (4.8) of a signal coming from a transmitter (4.1) connected by a plurality of current-carrying channels forming a transmission line, comprising:

   - means for demodulating the signals modulated on different carriers over the different transmission channels,
   - means for unspreading the spectrum of the different components of the signal using a multi-component spreading code,

   **characterised in that** said means for demodulation and unspreading are adapted to demodulate and unspread a signal the various components of which are emitted without duplication from different channels within the plurality of channels connecting the transmitter and the receiver.

9. Process or apparatus according to one of the preceding claims, wherein the transmission channels are electricity lines.

10. Data transmission system comprising at least one transmitter (4.1) according to claim 7 and at least one receiver (4.8) according to claim 8.

11. Aircraft (5.1) comprising a transmission system according to claim 10.


**Patentansprüche**

1. Verfahren zum Senden eines Signals durch einen Sender (4.1) zu einem Empfänger (4.8), der über mehrere Trägerstromkanäle in Übertragungsleitung (4.2) verbunden ist, und das Folgendes aufweist:

   - einen Schritt des Spreizens des Spektrums des Signals durch Multiplizieren des Signals mit jeder der Komponenten eines Multikomponenten-Spreizungscodes,
   - einen Schritt des Sendens der Signale, die sich aus dieser Multiplikation mit jeder der Komponenten des Spreizungscodes auf unterschiedlichen Trägerwellen ergeben,

   **dadurch gekennzeichnet, dass** diese Trägerwellen ohne Duplikation auf verschiedene Kanäle innerhalb der mehreren Kanäle, die den Sender und den Empfänger verbinden, verteilt werden.

2. Verfahren nach Anspruch 1, bei dem die Größe des Spreizungscodes der Gesamtanzahl der auf der Einheit der Kanäle, die den Sender und den Empfänger verbinden, verfügbaren Trägerwellen entspricht.

3. Verfahren nach Anspruch 1, bei dem die verschiedenen Trägerwellen auf jedem Kanal gemäß einem OFDM-Schema gesendet werden.

4. Verfahren zum Empfangen eines Signals, das von einem Sender (4.1) stammt, durch einen Empfänger (4.8), der durch mehrere Trägerstromkanäle in Übertragungsleitung (4.2) verbunden ist, und das Folgendes aufweist:

- einen Demodulationsschritt der auf verschiedenen Trägerwellen auf den verschiedenen Übertragungskanälen modulierten Signale,
- einen Entspreizungsschritt des Spektrums der verschiedenen Komponenten des Signals mit Hilfe eines Multikomponenten-Spreizungscodes,

**dadurch gekennzeichnet, dass** die verschiedenen Demodulations- und Entspreizungsschritte ein Signal demodulieren und entspreizen können, dessen verschiedene Komponenten ohne Duplikation von unterschiedlichen Kanälen innerhalb der mehreren Kanäle, die den Sender und den Empfänger verbinden, stammen.

5. Verfahren nach Anspruch 4, bei dem die Größe des Spreizungscodes der Gesamtanzahl Trägerwellen entspricht, die auf der Einheit der Kanäle, die den Sender und den Empfänger verbinden, verfügbar sind.

6. Verfahren nach Anspruch 4, wobei der Demodulationsschritt ein OFDM-Demodulationsschritt ist.

7. Sender (4.1) für Signale zu einem Empfänger (4.8), der durch mehrere Trägerstromkanäle in Übertragungsleitung (4.2) verbunden ist und Folgendes aufweist:

- Mittel zum Spreizen des Spektrums des Signals durch Multiplikation des Signals mit jeder der Komponenten eines Multikomponenten-Spreizungscodes,
- Mittel zum Senden der Signale, die aus dieser Multiplikation mit jeder der Komponenten des Spreizungscodes auf unterschiedlichen Trägerwellen resultieren,

**dadurch gekennzeichnet, dass** der Sender Mittel aufweist, um diese Trägerwellen ohne Duplikation auf verschiedene Kanäle innerhalb der mehreren Kanäle, die den Sender und den Empfänger verbinden, zu verteilen.

8. Empfänger (4.8) eines Signals, das von einem Sender (4.1) stammt, der durch mehrere Trägerstromkanäle in Übertragungsleitung verbunden ist und Folgendes aufweist:

- Mittel zum Demodulieren der auf unterschiedlichen Trägerwellen auf den verschiedenen Übertragungskanälen modulierten Signale,
- Mittel zum Entspreizen des Spektrums der verschiedenen Komponenten des Signals mit Hilfe eines Multikomponenten-Spreizungscodes,

**dadurch gekennzeichnet, dass** die Demodulations- und Entspreizungsmittel ein Signal, dessen unterschiedliche Komponenten ohne Duplikation von verschiedenen Kanälen innerhalb der mehreren Kanäle, die den Sender und den Empfänger verbinden, stammen, demodulieren und entspreizen können.

9. Verfahren oder Vorrichtung nach einem der vorhergehenden Ansprüche, wobei die Übertragungskanäle elektrische Leitungen sind.

10. Datenübertragungssystem, das mindestens einen Sender (4.1) nach Anspruch 7 und mindestens einen Empfänger (4.8) nach Anspruch 8 aufweist.

11. Flugzeug (5.1), das ein Übertragungssystem nach Anspruch 10 aufweist.

**Fig. 1**

Fig. 2

**Fig. 3**

**Fig. 4**

Fig. 5

## RÉFÉRENCES CITÉES DANS LA DESCRIPTION

**Documents brevets cités dans la description**

- EP 0913955 A2

**Littérature non-brevet citée dans la description**

- **DAI H et al.** Advanced signal processing for power line communications. *IEEE communications magazine,* 05 Mai 2003, vol. 41

- **CRUSSIERE M et al.** Robust and high-bit rate communications over PLC channels : a bit-loading multi-carrier spread-spectrum solution. *Power line communications and its applications, 2005 international symposium on Vancouver,* 06 Avril 2005